(19) Europäisches Patentamt
European Patent Office
Office européen des brevets

(11) **EP 4 546 893 A1**

(12) **EUROPEAN PATENT APPLICATION**
published in accordance with Art. 153(4) EPC

(43) Date of publication:
**30.04.2025 Bulletin 2025/18**

(21) Application number: **22947893.8**

(22) Date of filing: **21.06.2022**

(51) International Patent Classification (IPC):
*H04W 52/34* (2009.01)

(52) Cooperative Patent Classification (CPC):
H04W 52/34

(86) International application number:
**PCT/JP2022/024668**

(87) International publication number:
**WO 2023/248330 (28.12.2023 Gazette 2023/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **SHIBAIKE, Naoya**
  **Tokyo 100-6150 (JP)**
• **MATSUMURA, Yuki**
  **Tokyo 100-6150 (JP)**
• **ECHIGO, Haruhi**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, RADIO COMMUNICATION METHOD, AND BASE STATION**

(57) A terminal according to an aspect of the present disclosure includes a control section that determines, based on at least one of a specific maximum output power, a resource amount used for one or more first uplink transmissions, and a first transmit power used for the one or more first uplink transmissions, an upper limit of a second transmit power for a second uplink transmission, and a transmitting section that performs the second uplink transmission by using the second transmit power. An aspect of the present disclosure allows coverage of UL transmission to be improved.

FIG. 2A

FIG. 2B

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement, and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and the like) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), improvement in coverage is under study.

Meanwhile, for an uplink (UL) transmission, a nominal maximum output power/evaluation period/power class is not clear. Unless studies are sufficiently made on the nominal maximum output power/evaluation period/power class, reduction in coverage, degradation in communication quality, reduction in throughput, or the like may be caused.

In view of this, an object of the present disclosure is to provide a terminal, a radio communication method, and a base station that improve coverage of UL transmission.

Solution to Problem

A terminal according to an aspect of the present disclosure includes a control section that determines, based on at least one of a specific maximum output power, a resource amount used for one or more first uplink transmissions, and a first transmit power used for the one or more first uplink transmissions, an upper limit of a second transmit power for a second uplink transmission, and a transmitting section that performs the second uplink transmission by using the second transmit power.

Advantageous Effects of Invention

An aspect of the present disclosure allows coverage of UL transmission to be improved.

Brief Description of Drawings

[FIG. 1] FIG. 1 shows an example of a relation between UE power classes and nominal maximum output powers.
[FIG. 2] FIGS. 2A and 2B each show an example of Embodiment #2.
[FIG. 3] FIG. 3 shows an example of Embodiment #3-1.
[FIG. 4] FIG. 4 shows an example of a metric according to Embodiment #3-2.
[FIG. 5] FIGS. 5A to 5C each show an example of an evaluation period according to Embodiment #3-2.
[FIG. 6] FIG. 6 shows Example 1 of Embodiment #3-3.

[FIG. 7] FIG. 7 shows Example 2 of Embodiment #3-3.

[FIG. 8] FIG. 8 is a diagram to show an example of a schematic structure of a radio communication system according to one embodiment.

[FIG. 9] FIG. 9 is a diagram to show an example of a structure of a base station according to one embodiment.

[FIG. 10] FIG. 10 is a diagram to show an example of a structure of a user terminal according to one embodiment.

[FIG. 11] FIG. 11 is a diagram to show an example of a hardware structure of the base station and the user terminal according to one embodiment.

[FIG. 12] FIG. 12 is a diagram to show an example of a vehicle according to one embodiment.

Description of Embodiments

(PUSCH Transmit Power Control)

In NR, a transmit power for a PUSCH is controlled based on a TPC command (also referred to as a TPC command value, increase/decrease value, correction value, or the like) indicated by a value of a field (also referred to as a TPC command field or the like) in DCI.

For example, in a case where a UE transmits a PUSCH on active UL BWP b of carrier f of serving cell c by using a parameter set (open loop parameter set) with index j and using index l of a power control adjustment state (PUSCH power control adjustment state), a transmit power ($P_{PUSCH,b,f,c}(i, j, q_d, l)$) [dBm] for the PUSCH in PUSCH transmission occasion (also referred to as transmission period or the like) i may be based on at least one of $P_{CMAX,f,c}(i)$, $P_{O\_PUSCH,b,f,c}(j)$, $M^{PUSCH}_{RB,b,f,c}(i)$, $\alpha_{b,f,c}(j)$, $PL_{b,f,c}(q_d)$, $\Delta_{TF,b,f,c}(i)$, and $f_{b,f,c}(i, l)$, as the following equation.

[Math. 1]

$$P_{\text{PUSCH},b,f,c}(i,j,q_d,l)$$
$$= min \begin{Bmatrix} P_{\text{CMAX},f,c}(i), \\ P_{\text{O\_PUSCH},b,f,c}(j) + 10\,log_{10}(\,2^\mu \cdot M_{\text{RB},b,f,c}^{\text{PUSCH}}(i)) + \alpha_{b,f,c}(j) \cdot PL_{b,f,c}(q_d) \\ + \Delta_{\text{TF},b,f,c}(i) + f_{b,f,c}(i,l) \end{Bmatrix}$$
$$[\text{dBm}]$$
$$(1)$$

The power control adjustment state may be referred to as a closed loop (CL)-power control (PC) state, a value based on a TPC command of power control adjustment state index l, a TPC command accumulation value, or a value by closed loop. l may be referred to as a closed loop index.

PUSCH transmission occasion i is a period when a PUSCH is transmitted, and may include, for example, one or more symbols, one or more slots, or the like.

$P_{CMAX,f,c}(i)$ is a maximum transmit power of a user terminal (configured maximum output power, UE configured maximum output power) configured for carrier f of serving cell c in transmission occasion i, for example.

$P_{O\_PUSCH,b,f,c}(j)$ is a parameter related to a target received power (for example, also referred to as a parameter related to a transmit power offset, a transmit power offset P0, a target received power parameter, or the like) configured for active UL BWP b of carrier f of serving cell c in transmission occasion i, for example. $P_{O\_UE\_PUSCH,b,f,c}(j)$ may be the sum of $P_{O\_NOMINAL\_PUSCH,f,c}(j)$ and $P_{O\_UE\_PUSCH,b,f,c}(j)$.

$M^{PUSCH}_{RB,b,f,c}(i)$ is the number of resource blocks (bandwidth) allocated to the PUSCH for transmission occasion i on active UL BWP b of carrier f of serving cell c and subcarrier spacing μ, for example. $\alpha_{b,f,c}(j)$ is a value provided by a higher layer parameter (for example, also referred to as msg3-Alpha, p0-PUSCH-Alpha, fractional factor, or the like).

$PL_{b,f,c}(q_d)$ is a pathloss (pathloss estimation [dB], pathloss compensation) calculated by a user terminal by using index $q_d$ of a reference signal for downlink BWP (RS, pathloss reference RS, pathloss (PL)-RS, RS for pathloss reference, DL-RS for pathloss measurement, PUSCH-PathlossReferenceRS) associated with active UL BWP b of carrier f of serving cell c, for example.

In a case where a UE is provided with no pathloss reference RS (for example, PUSCH-PathlossReferenceRS) or the UE is provided with no individual higher layer parameter, the UE may calculate $PL_{b,f,c}(q_d)$ by using an RS resource from a synchronization signal (SS)/physical broadcast channel (PBCH) block (SS block (SSB)) used for obtainment of a Master Information Block (MIB).

In a case where a UE is configured with RS resource indices of the number up to a value of the maximum number of pathloss reference RSs (for example, maxNrofPUSCH-PathlossReferenceRSs) and configured, by the pathloss reference RSs, with a set of RS configurations for the respective RS resource indices, a set of the RS resource indices may include one or both of a set of SS/PBCH block indices and a set of channel state information (CSI)-reference signal (RS) resource indices. The UE may identify RS resource index $q_d$ in the set of RS resource indices.

In a case where PUSCH transmission is scheduled by a Random Access Response (RAR) UL grant, a UE may use RS resource index $q_d$ the same as that for the corresponding PRACH transmission.

In a case where a UE is provided with a PUSCH power control configuration (for example, SRI-PUSCH-PowerControl) by a sounding reference signal (SRS) resource indicator (SRI) and provided with one or more values of pathloss reference RS IDs, mapping between a set of values for an SRI field in DCI format 0_1 and a set of the pathloss reference RS ID values may be obtained from higher layer signaling (for example, sri-PUSCH-PowerControl-Id in SRI-PUSCH-PowerControl). The UE may determine RS resource index $q_d$ from the pathloss reference RS IDs mapped to the SRI field values in DCI format 0_1 that schedules the PUSCH.

In a case where PUSCH transmission is scheduled by DCI format 0_0 and a UE is provided with no PUCCH spatial relation information with respect to a PUCCH resource having the minimum index for active UL BWP b of each carrier f and serving cell c, the UE may use RS resource index $q_d$ the same as that for PUCCH transmission in the PUCCH resource.

In a case where PUSCH transmission is scheduled by DCI format 0_0 and a UE is provided with no PUCCH transmission spatial setting, or where PUSCH transmission is scheduled by DCI format 0_1 including no SRI field, or where the UE is provided with no PUSCH power control configuration by an SRI, the UE may use RS resource index $q_d$ having a pathloss reference RS ID of zero.

For PUSCH transmission configured with configured grant configuration (for example, ConfiguredGrantConfig), in a case where the configured grant configuration includes a specific parameter (for example, rrc-ConfiguredUplink-Grant), a pathloss reference index (for example, pathlossReferenceIndex) in the specific parameter may provide a UE with RS resource index $q_d$.

For PUSCH transmission configured with configured grant configuration, in a case where the configured grant configuration includes no specific parameter, a UE may determine RS resource index $q_d$ from pathloss reference RS ID values mapped to an SRI field in a DCI format that activates the PUSCH transmission. In a case where the DCI format includes no SRI field, the UE may determine RS resource index $q_d$ having a pathloss reference RS ID of zero.

$\Delta_{TF,b,f,c}(i)$ is a transmit power adjustment component (transmission power adjustment component) (offset, transmission format compensation) for UL BWP b of carrier f of serving cell c.

$f_{b,f,c}(i,l)$ is a PUSCH power control adjustment state for active UL BWP b of carrier f of serving cell c in transmission occasion i. $f_{b,f,c}(i,l)$ may be based on $\delta_{PUSCH,b,f,c}(i, l)$.

In a case where TPC accumulation is enabled, $f_{b,f,c}(i,l)$ may be based on an accumulation value of $\delta_{PUSCH,b,f,c}(m,l)$.

In a case where TPC accumulation is disabled, $f_{b,f,c}(i,l)$ may be $\delta_{PUSCH,b,f,c}(i,l)$ (absolute value).

In a case where information (TPC-Accumulation) indicating TPC accumulation disabled is not configured (a case where the information indicating TPC accumulation disabled is not provided or a case where TPC accumulation is configured to be enabled), a UE accumulates TPC command values and determines a transmit power based on a result of the accumulation (power control state) (applies the TPC command values through the accumulation).

In a case where information (TPC-Accumulation) indicating TPC accumulation disabled is configured (a case where the information indicating TPC accumulation disabled is provided or a case where TPC accumulation is configured to be disabled), a UE a UE determines, without accumulating TPC command values, a transmit power based on the TPC command values (power control state) (applies the TPC command values without using accumulation).

$\delta_{PUSCH,b,f,c}(i,l)$ may be a TPC command value included in DCI format 0_0 or DCI format 0_1 that schedules PUSCH transmission occasion i on active UL BWP b of carrier f of serving cell c or a TPC command value encoded coupled with another TPC command in DCI format 2_2 having a CRC scrambled with a specific RNTI (Radio Network Temporary Identifier) (for example, TPC-PUSCH-RNTI).

$\sum_{m=0}^{C(Di)-1}\delta_{PUCCH,b,f,c}(m,l)$ may be the sum of TPC command values in a set Di of TPC command values having cardinality $C(D_i)$. $D_i$ may be a set of TPC command values that a UE receives between $(K_{PUSCH}(i - i_0) - 1)$ symbols before PUSCH transmission occasion $(i - i_0)$ and $K_{PUSCH}(i)$ symbols before PUSCH transmission occasion i, on active UL BWP b of carrier f of serving cell c, for PUSCH power control adjustment state l. $i_0$ may be a minimum positive integer for which $K_{PUSCH}(i - i_0)$ symbols before PUSCH transmission occasion $(i - i_0)$ is made earlier than $K_{PUSCH}(i)$ symbols before PUSCH transmission occasion i.

In a case where PUSCH transmission is scheduled by DCI format 0_0 or DCI format 0_1, $K_{PUSCH}(i)$ may be, on active UL BWP b of carrier f of serving cell c, the number of symbols after the last symbol of the corresponding PDCCH reception and before the first symbol of the PUSCH transmission. In a case where the PUSCH transmission is configured with configured grant configuration information (ConfiguredGrantConfig), $K_{PUSCH}(i)$ may be, on active UL BWP b of carrier f of serving cell c, the number of $K_{PUSCH,min}$ symbols equal to the product of the number of symbols per slot $N_{symb}^{slot}$ and a minimum value of a value provided by k2 in PUSCH common configuration information (PUSCH-ConfigCommon).

The power control adjustment state may be configured with whether the state has a plurality of states (for example, two states) or a single state by a higher layer parameter. In a case where a plurality of power control adjustment states are configured, one of the plurality of power control adjustment states may be identified by index I (for example, I ∈ {0, 1}).

Similarly to a transmit power for a PUSCH, a transmit power for a PUCCH and a transmit power for an SRS are limited by configured maximum output power $P_{CMAX,f,c(i)}$.

(Nominal Maximum Output Power/Configured Maximum Output Power)

A UE power class defines a maximum output power (nominal maximum output power, nominal UE power, UE maximum output power) with respect to a transmission bandwidth in a channel bandwidth of an NR carrier.

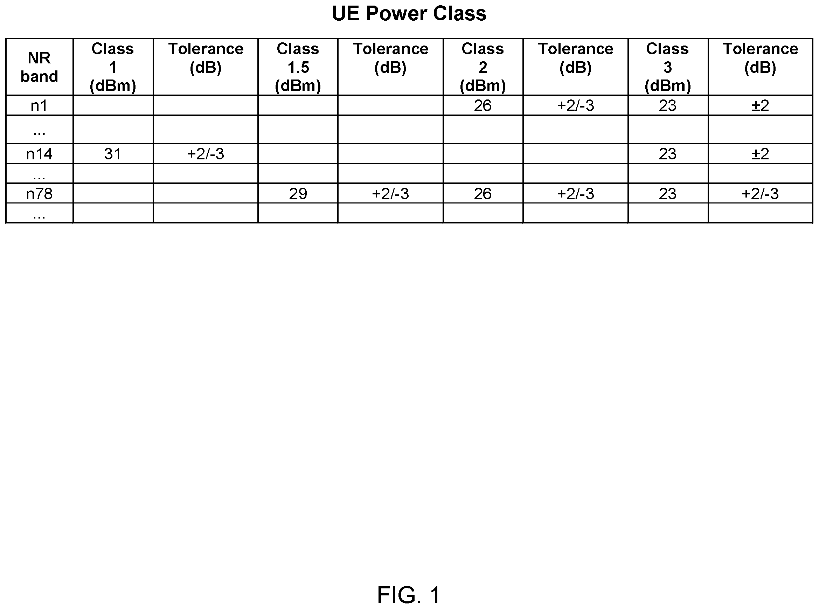

As in an example of FIG. 1, nominal maximum output power P_PowerClass is defined per UE power class (power class) and per band. Power class 1 is defined only for public safety. Power class 1.5 is defined for a UE with dual transmission (Tx). Power class 2 is defined for a high power UE. Power class 3 is defined for a handheld cellular UE.

Class 3 with 23 dBm is a default power class. 23 dBm is derived based on specific absorption rate (SAR) assumption in a case of using 100 % of a certain resource for UL transmission.

Settings (upper and lower limits) of P_CMAX are defined by the following expression.

[Math. 2]

$$P_{CMAX\_L,f,c} \leq P_{CMAX,f,c} \leq P_{CMAX\_H,f,c} \text{ with}$$
$$P_{CMAX\_L,f,c} = MIN \{P_{EMAX,c} - \Delta T_{C,c},$$
$$(P_{PowerClass} - \Delta P_{PowerClass}) - MAX(MAX(MPR_c + \Delta MPR_c, A\text{-}MPR_c) +$$
$$\Delta T_{IB,c} + \Delta T_{C,c} + \Delta T_{RxSRS}, P\text{-}MPR_c) \}$$
$$P_{CMAX\_H,f,c} = MIN \{P_{EMAX,c}, P_{PowerClass} - \Delta P_{PowerClass} \}$$

$$(2)$$

Here, P_EMAX,c is a value provided, for serving cell c, by a p-Max information element or additionalPmax (a maximum allowable UE output power notified by a higher layer). ΔP_PowerClass is adjustment with respect to nominal maximum output power P_PowerClass for a given power class and is power control depending on a duty cycle.

In a state (condition) of any one of State 1 to State 4 below, P_PowerClass > 0. In a case of none of State 1 to State 4, P_PowerClass = 0.

{State 1}

In a case where a condition of any one of the following is met, ΔP_PowerClass = 3dB for a power-class-2 (PC2) UE and ΔP_PowerClass = 6dB for a PC1.5 UE.

- p-Max of 23 dBm or lower is indicated
- No field of UE capability maxUplinkDutyCycle-PC2-FR1 is present, no field of UE capability maxUplinkDutyCycle-MPE-FR1 is present, and the percentage of UL symbols transmitted in a certain evaluation period is higher than 50 %
- A field of UE capability maxUplinkDutyCycle-PC2-FR1 is present, and the percentage of UL symbols transmitted in a certain evaluation period is higher than maxUplinkDutyCycle-PC2-FR1 (the exact evaluation period is shorter than one radio frame)
- A field of UE capability maxUplinkDutyCycle-MPE-FR1 is present, and the percentage of UL symbols transmitted in a certain evaluation period is higher than maxUplinkDutyCycle-MPE-FR1 (the exact evaluation period is shorter than one radio frame)

{State 2}

In a case where a condition of any one of the following is met, ΔP_PowerClass = 3dB for a PC1.5 UE.

- p-Max between 23 dBm and 26 dBm is indicated
- No field of UE capability maxUplinkDutyCycle-PC2-FR1 is present, no field of UE capability maxUplinkDutyCycle-MPE-FR1 is present, and the percentage of UL symbols transmitted in a certain evaluation period is between 25% and 50 %
- A field of UE capability maxUplinkDutyCycle-PC2-FR1 is present, and the percentage of UL symbols transmitted in a certain evaluation period is between maxUplinkDutyCycle-PC2-FR1 and maxUplinkDutyCycle-PC2-FR1/2 (the exact evaluation period is shorter than one radio frame)

- A field of UE capability maxUplinkDutyCycle-MPE-FR1 is present, and the percentage of UL symbols transmitted in a certain evaluation period is higher than maxUplinkDutyCycle-MPE-FR1 (the exact evaluation period is shorter than one radio frame)

{State 3}

In a case where a UE is configured with a supplemental uplink (SUL) configuration and, in a band that the UE indicates power class 2, a requirement of a default power class defined in a specification is applied, $\Delta P\_PowerClass = 3dB$.

{State 4}

In a case where a UE of PC2 capability with transmission diversity (txDiversity-r16) capability or a UE of PC1.5 capability indicates SRS transmission switch (SRS-TXSwitch) capability 't1r2' or 't1r4' or 't1r1-t1r2' or 't1r1-t1r2-t1r4', $\Delta P\_PowerClass = 3dB$ is applied, in an SRS transmission occasion with SRS resources configured in each SRS resource set including one SRS port and with a usage in SRS-ResourceSet set as antenna switching ('antennaSwitching').

Rel-17 NR defines a high power UE. The high power UE is possible to perform transmission by using a power higher than 23 dBm. 23 dBm is considered as a default PC (PC3). 23 dBm is derived based on an SAR requirement in a case that a UE performs UL transmission in 100 % of a certain resource.

Such a high power transmission is, however, not always available because the high power transmission depends on some conditions. For example, the conditions may include a condition that how much resources a UE transmits in a certain period and a condition of UE capability.

In a case where such a condition is not met, 23 dBm is not considered as the maximum transmit power. In other words, the maximum output power falls back to a default PC.

Even when a UL transmission period is limited, the maximum output power is limited. For example, if 20 % of the entire resource is not used, 10 log (0.2) is about -7 dB, and thus the SAR requirement available only for public safety is possible to be met even when the maximum output power is about 23 + 7 = 30 dBm.

The definition of a "certain evaluation period" is not clear. Therefore, a current fallback condition is conservative. In a case where no UL transmission or few UL transmission is present before the "certain evaluation period" and where a period for the SAR requirement to be checked is different from the "certain evaluation period," the fallback condition may be "fewer than 50 % UL transmission."

For enhanced reduced capability devices (eRedCap) or the like, no power class having a nominal maximum output power lower than PC3 is present.

As described above, the nominal maximum output power/evaluation period/power class is not clear. Unless studies are sufficiently made on the nominal maximum output power/evaluation period/power class, reduction in coverage, degradation in communication quality, reduction in throughput, or the like may be caused.

In view of this, the inventors of the present invention came up with the idea of a method of determining a transmit power.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a nominal maximum output power, a nominal UE power, a UE maximum output power, a maximum UE power, a maximum output power, a maximum output power defined for a power class, P_PowerClass, and $P_{PowerClass}$ may be interchangeably interpreted. In the present disclosure, adjustment for a maximum output power for a power class given, adjustment for a nominal maximum output power, $\Delta P\_PowerClass$, and $\Delta P_{PowerClass}$ may be interchangeably interpreted.

In the present disclosure, a configured maximum output power, a configured transmit power, a UE configured maximum output power, a configured maximum UE output power, an actual maximum output power, a maximum output power, P_CMAX, and $P_{CMAX,f,c}(i)$ may be interchangeably interpreted. In the present disclosure, a UE power class, a power class, and a PC may be interchangeably interpreted.

In the present disclosure, a base station, a gNB, and a network (NW) may be interchangeably interpreted.

(Radio Communication Method)

In the embodiments, uplink (UL) transmission may include at least one of a PUSCH, a PUCCH, and an SRS.

In the embodiments, an upper limit of a transmit power (PUSCH transmit power, PUCCH transmit power, SRS transmit power), configured maximum output power $P_{CMAX,f,c}(i)$, configured maximum output power upper limit $P_{CMAX\_H,f,c}$, and $P_{PowerClass}-\Delta P_{PowerClass}$ may be interchangeably interpreted.

In the embodiments, a specific maximum output power, a nominal maximum output power, a configured maximum output power, a default maximum output power, and an energy budget may be interchangeably interpreted.

In the embodiments, a transmission resource amount, a transmission time, and a transmission duration may be interchangeably interpreted.

In the embodiments, adding, adjustment, reduction, addition, and subtraction may be interchangeably interpreted.

<Embodiment #1>

A new power class may be defined.

<<Embodiment #1-1>>

A new power class with a nominal maximum output power of 30 dBm or higher may be defined. This allows coverage of UL transmission to be widened, without sacrificing a UL resource (for example, without repetition).

The target of the new power class may be limited to at least one device/scenario of the following.

- The number of Tx chains (RF chains, power amplifiers (PAs)) is two or more
- Public safety only
- A device that is not a portable device or that has no calling function

<<Embodiment #1-2>>

A new power class with a nominal maximum output power of lower than 23 dBm may be defined. This allows a more efficient/cheaper-cost UE to be implemented.

The target of the new power class may be limited to at least one device/scenario of the following.

- A UE having a capability reduced as compared with a typical UE (such as eRedCap or IoT device) only

This embodiment allows a UE to use an appropriate nominal maximum output power/power class.

<Embodiment #2>

For determination of a configured maximum output power (for example, P_CMAX, an upper limit of a second transmit power) for a UL transmission (second UL transmission), a UE may take account of an actual amount of resources (actual transmission resource amount, actual transmission time, first transmit power) used for a UL transmission (one or more first UL transmissions). The UL transmissions may include a past UL transmission or may include a UL transmission using the configured maximum output power. The resources may be time resources or may be frequency resources.

<<Embodiment #2-1>>

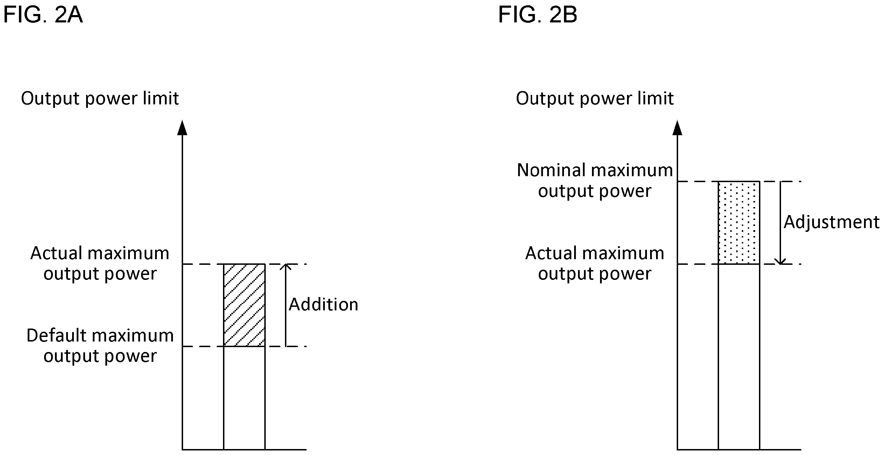

A UE may calculate an additional available power (additional power, additional amount, adjustment amount) based on a default maximum output power, taking account of an actual amount of resources used for a UL transmission. The default maximum output power may be a nominal maximum output power (23 dBm) of a default PC.
In an example of FIG. 2A, the additional power may depend on an actual amount for a UL transmission. A UE may determine a configured maximum output power by adding the additional power to a default maximum output power.
For example, the additional power may be $10\log(x/100)^{-1}$. Here, x may be a percentage of UL symbols transmitted in a certain evaluation period. The configured maximum output power may be configured maximum output power = default maximum output power + $10\log(x/100)^{-1}$. The actual amount of resources used for the UL transmission may be in a unit of any one of a system frame, a slot, and a symbol.
In a case of x = 20 [%], the configured maximum output power may be configured maximum output power = default maximum output power + $10\log(20/100)^{-1}$ = 20 + 6.99 = 29.99 [dBm]. In a case of x = 50 [%], the configured maximum output power may be configured maximum output power = default maximum output power + $10\log(50/100)^{-1}$ = 20 + 3.01 = 26.01 [dBm]. In a case of x = 80 [%], the configured maximum output power may be configured maximum output power = default maximum output power + $10\log(80/100)^{-1}$ = 20 + 0.97 = 23.97 [dBm].
The configured maximum output power may be obtained by the round function, floor function, ceil function, or the like with respect to default maximum output power + additional power.
For the configured maximum output power, another upper limit may be provided. For example, such another upper limit may be defined per power class.

<<Embodiment #2-2>>

A UE may calculate, based on a nominal maximum output power defined for a corresponding power class, an adjustment power (reduction power, adjustment amount) from the defined nominal maximum output power. Here, the defined nominal maximum output power may be a default maximum output power.
In an example of FIG. 2B, the adjustment power may depend on an actual amount for a UL transmission. A UE may determine a configured maximum output power by subtracting the adjustment power from the default maximum output power.
The configured maximum output power may be obtained by the round function, floor function, ceil function, or the like with respect to default maximum output power - adjustment power.
This embodiment allows a configured maximum output power to be appropriately determined based on resources used for transmission.

<Embodiment #3>

For determination of a configured maximum output power (for example, P_CMAX, an upper limit of a second transmit power) for a UL transmission (second UL transmission), a UE may take account of an actual transmit power (actual transmission time, actual transmission energy, first transmit power) allocated to a UL transmission (one or more first UL transmissions). The UL transmissions may include a past UL transmission or may include a UL transmission using the configured maximum output power. The resources may be time resources or may be frequency resources. The configured maximum output power is possible to be optimized.
In a rule of an existing specification depending on a percentage of UL resources per evaluation period, a UE assumes that a nominal maximum output power is allocated to a power class all the time. Per transmit power control (TPC) function in layer 1, in a case where a lower power is allocated, from a view point of SAR, further relieve is technically allowed.

<<Embodiment #3-1>>

For determination of a configured maximum power, at least one factor of the following may be taken into account.

{Option 1-1} Actual transmit power in each UL transmission in an evaluation period

For example, the actual transmit power may be based on at least one of an RRC-configured parameter, a pathloss, a content to be transmitted, a bandwidth (for example, the number of RBs), and a closed loop power control parameter.

{Option 1-2} Duration of each UL transmission in an evaluation period

The duration may be the total number of symbols for the UL transmission or may be the number of slots for the UL transmission.

{Option 1-3} Duration of the whole evaluation period

The duration may be the number of radio frames (10 ms) or may be expressed in a unit of ms.

{Option 1-4} Whole energy in an evaluation period That is the product of a transmit power by a transmission duration in the evaluation period.

For example, the whole energy may be whole energy = transmit power [ms] * UL transmission duration/evaluation period duration.

{Option 1-5} Duration of a UL transmission (to be transmitted) thereafter

The duration may be the total number of symbols for the UL transmission or may be the number of slots for the UL transmission.

{Option 1-6} Maximum power reduction (MPR)

The MPR may be a value expressed in a unit of dB.

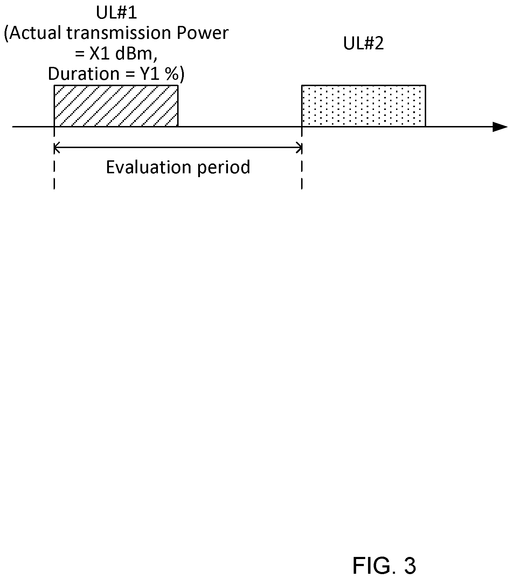

In an example of FIG. 3, a UE transmits UL #1 in an evaluation period, and after the evaluation period, transmits UL #2. The actual transmit power of UL #1 is X1 dBm. The duration of UL #1 is Y1 % of the duration of the evaluation period.

Assuming that the duration of the evaluation period is 1, the maximum energy (energy budget) in the evaluation period is 200 [mW] (= 23 dBm) * 1 = 200. If X1 = 400 [mW] (= 26 dBm) and Y1 = 50 [%], the transmission energy of UL #1 is 400 * 50/100 = 200 and all the energy budget is used. If X1 = 300 [mW] (= 24.8 dBm) and Y1 = 50 [%], the transmission energy of UL #1 is 300 * 50/100 = 150 and a remnant of the energy budget is left.

<<Embodiment #3-2>>

A metric (measurement reference, for example, energy budget, consumed energy, or the like) may be newly defined.

{Option 2-1a}

The energy budget may be defined as the product of a default maximum output power (for example, 23 dBm or the linear value) and a duration of an evaluation period.

{Option 2-1b}

The consumed energy may be defined as the sum of the products of actual transmit powers (dB values or linear values) for respective UL transmissions in an evaluation period and the durations.

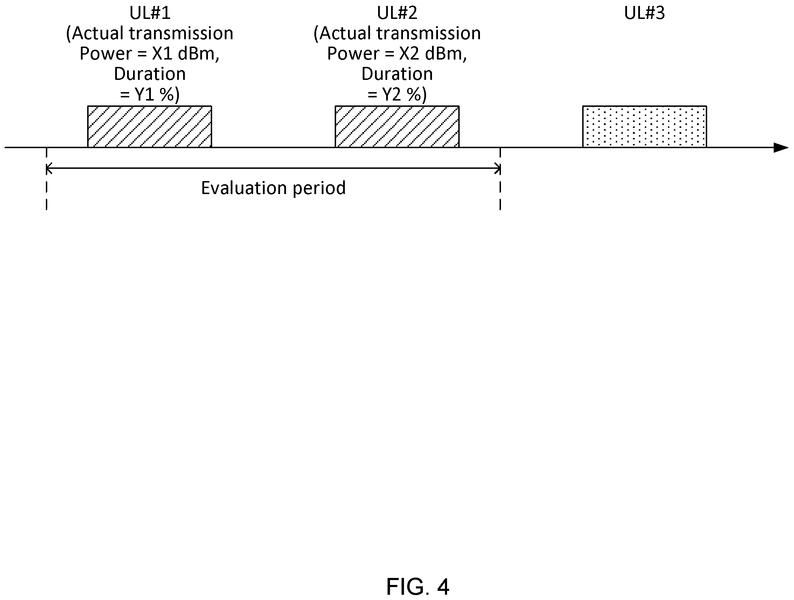

In an example of FIG. 4, a UE transmits UL #1 and UL #2 in an evaluation period, and after the evaluation period, transmits UL #3. The actual transmit power of UL #1 is X1 dBm (linear value x1 [mW]). The duration of UL #1 is Y1 % of the duration of the evaluation period. The actual transmit power of UL #2 is X2 dBm (linear value x2 [mW]). The duration of UL #1 is Y2 % of the duration of the evaluation period. The energy budget is default maximum output power (linear value) * evaluation period duration. The consumed energy is x1 * Y1 + x2 * Y2.

{Option 2-2a}

An exact evaluation period may be defined.

The duration of the evaluation period may be defined using at least one parameter of the following.

- The number of slots/symbols
- The number of radio frames (10 ms)
- Absolute time (for example, 1 ms, 10 ms, 1 sec, or the like)

The start/end of the evaluation period may be defined using at least one parameter of the following.

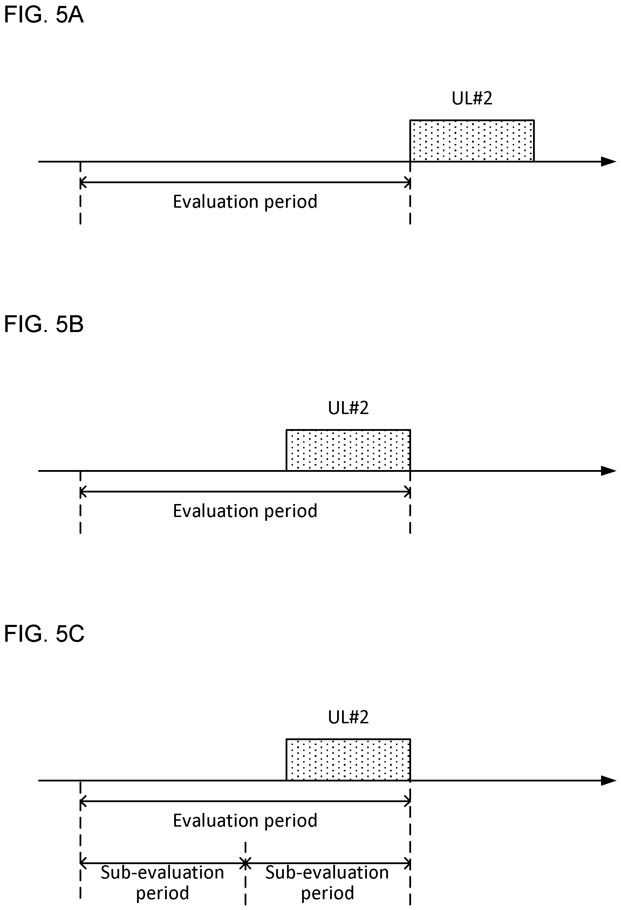

- Start of a UL transmission In an example of FIG. 5A, the end of an evaluation period may be the start of UL #2 that follows.
- End of a UL transmission In an example of FIG. 5B, the start of an evaluation period may be the end of UL #2 that follows.

The UL transmission may include a report of information related to a transmit power.

{Option 2-2b}

An exact sub-evaluation period may be defined.

The duration of the sub-evaluation period may be defined using at least one parameter of the following.

- The number of slots/symbols
- The number of radio frames (10 ms)
- Absolute time (for example, 1 ms, 10 ms, 1 sec, or the like)

The duration of an evaluation period may be an integer multiple of the duration of a sub-evaluation period.

In an example of FIG. 5C, the end of an evaluation period may be the start of UL #2 that follows. The duration of the evaluation period may be the duration of two consecutive sub-evaluation periods.

<<Embodiment #3-3>>

An operation may be defined that determines a configured maximum output power taking account of an actual transmit power allocated to a UL transmission.

{Example 1}

An evaluation period ends at the start of a following UL transmission. The consumed energy in the evaluation period is calculated. The consumed energy is compared with an energy budget. If the consumed energy is equal to the energy budget or is greater than the energy budget, a power up to a default maximum output power is assumed to be used for the following UL transmission. If the consumed energy is smaller than the energy budget, a configured maximum output power may be greater than the default maximum output power, for the following UL transmission.

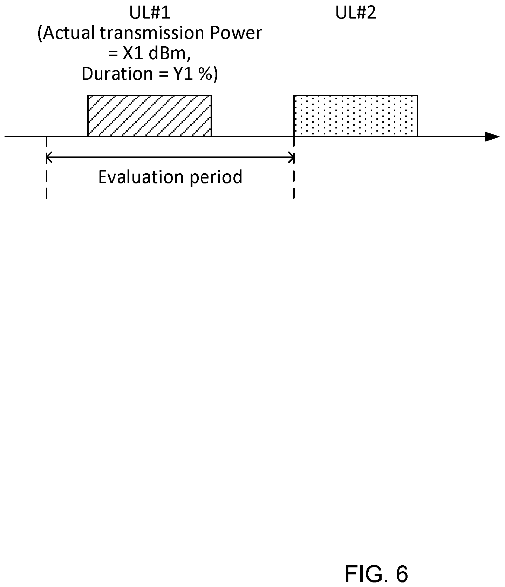

In an example of FIG. 6, a UE transmits UL #1 in an evaluation period. The actual transmit power of UL #1 is X1 dBm. The duration of UL #1 is Y % of the duration of the evaluation period. The evaluation period ends at the start of UL #2 that follows.

The duration configured for a UL transmission (for example, UL #2) in a second evaluation period following the evaluation period may be limited based on at least one of an energy budget in the second evaluation period and a configured maximum output power.

{Example 2}

An evaluation period ends at the end of a following UL transmission. The consumed energy in the evaluation period is calculated. The consumed energy is compared with an energy budget. If the consumed energy is equal to the energy budget or is greater than the energy budget, a power up to a default maximum output power is assumed to be used for the following UL transmission. If the consumed energy is smaller than the energy budget, a configured maximum output power may be determined based on at least one of a remnant of the energy budget and the duration of the following UL transmission. For example, the configured maximum output power may be configured maximum output power = remnant of energy budget/duration of following UL transmission.

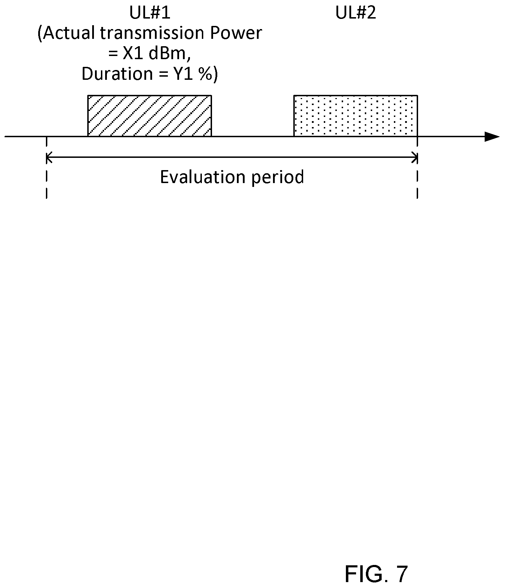

In an example of FIG. 7, a UE transmits UL #1 in an evaluation period. The actual transmit power of UL #1 is X1 dBm. The duration of UL #1 is Y % of the duration of the evaluation period. The evaluation period ends at the end of UL #2 that follows.

A configured maximum output power may be limited by, in addition to an energy-budget-based restriction in this embodiment, another upper limit. Such another upper limit such another upper limit may be a nominal maximum output power defined per power class.

The duration configured for a UL transmission following a certain UL transmission may be limited based on at least one of the remnant of the energy budget and the configured maximum output power.

This embodiment allows a UE to appropriately determine a configured maximum output power based on an actual transmit power.

<Supplements>

At least one operation in the embodiment described above may be applied only to a UE having reported a specific UE capability or a UE supporting the specific UE capability.

The specific UE capability may indicate at least one of the following:

- Supporting 6G or radio access technology (RAT) newly defined
- Supporting a new UE power class
- Supporting determination/configuration of a maximum output power taking account of an amount of resources used for a previous UL transmission
- Supporting determination/configuration of a maximum output power taking account of an amount of resources used for an actual UL transmission
- Supporting a report related to a factor for determination of an actual maximum output power

The specific UE capability may be a capability applied over all the frequencies (in common, irrespective of frequency), may be a capability per frequency (for example, cell, band, BWP), may be a capability per frequency range (for example, FR1, FR2, FR3, FR4, FR5, FR2-1, FR2-2), or may be a capability per subcarrier spacing (SCS).

The specific UE capability may be a capability applied over all the duplex schemes (in common, irrespective of duplex scheme), or may be a capability per duplex scheme (for example, time division duplex (TDD), frequency division duplex (FDD)).

At least one operation in the embodiment described above may be applied to a case where a UE is configured with specific information related to the embodiment described above by higher layer signaling. For example, the specific information may be information indicating enabling of at least one operation in the embodiment described above, any RRC parameter for a specific release (for example, Rel. 18), or the like.

In a case where a UE does not support at least one operation of the specific UE capability or is not configured with the specific information, the UE may apply an operation in Rel. 15/16/17, for example.

(Supplementary Note)

Regarding one embodiment of the present disclosure, the following supplementary notes of the invention will be given.

{Supplementary Note 1}

A terminal including:

a control section that determines, based on at least one of a specific maximum output power, a resource amount used for one or more first uplink transmissions, and a first transmit power used for the one or more first uplink transmissions, an upper limit of a second transmit power for a second uplink transmission; and
a transmitting section that performs the second uplink transmission by using the second transmit power.

{Supplementary Note 2}

The terminal according to supplementary note 1, wherein
the control section determines the upper limit by adding or subtracting an adjustment amount based on the resource amount to or from a value based on the specific maximum output power.

{Supplementary Note 3}

The terminal according to supplementary note 1 or 2, wherein
the control section determines available energy based on the specific maximum output power in a specific period and determines the upper limit in the specific period based on the available energy.

{Supplementary Note 4}

The terminal according to any one of supplementary notes 1 to 3, wherein
the specific maximum output power is 30 dBm or higher or is lower than 23 dBm.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

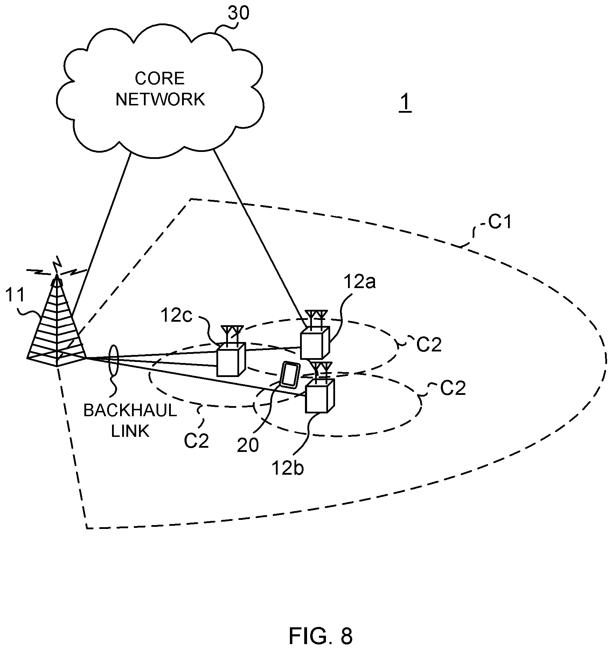

FIG. 8 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and the like.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in UL and DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information, or the like may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI that schedules a PDSCH may be referred to as "DL assignment," "DL DCI," or the like, and DCI that schedules a PUSCH may be referred to as "UL grant," "UL DCI," or the like. Note that the PDSCH may be interpreted as "DL data," and the PUSCH may be interpreted as "UL data."

For detection of a PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, a random access preamble for establishment of a connection with a cell may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for the PBCH) may be referred to as an SS/PBCH block, an SS Block (SSB), or the like. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

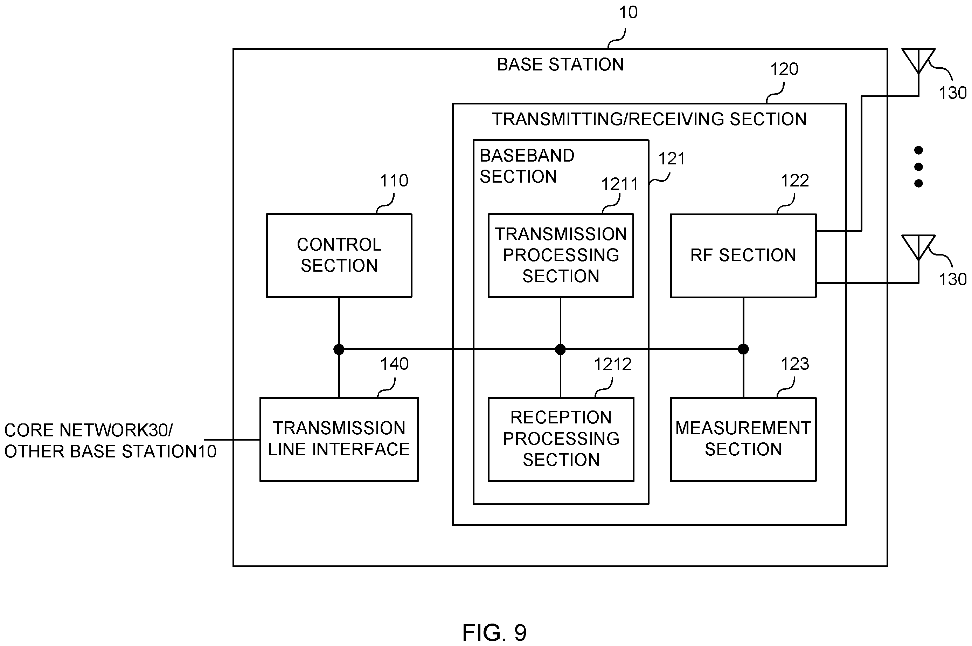

FIG. 9 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may include the transmission processing section 1211 and the RF section 122. The receiving section may include the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, or the like, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, or the like, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The control section 110 may control reception of one or more first uplink transmissions. The transmitting/receiving section 120 may perform reception of a second uplink transmission. An upper limit of a second transmit power for the second uplink transmission may be based on at least one of a specific maximum output power, a resource amount used for the one or more first uplink transmissions, and a first transmit power used for the one or more first uplink transmissions.

(User Terminal)

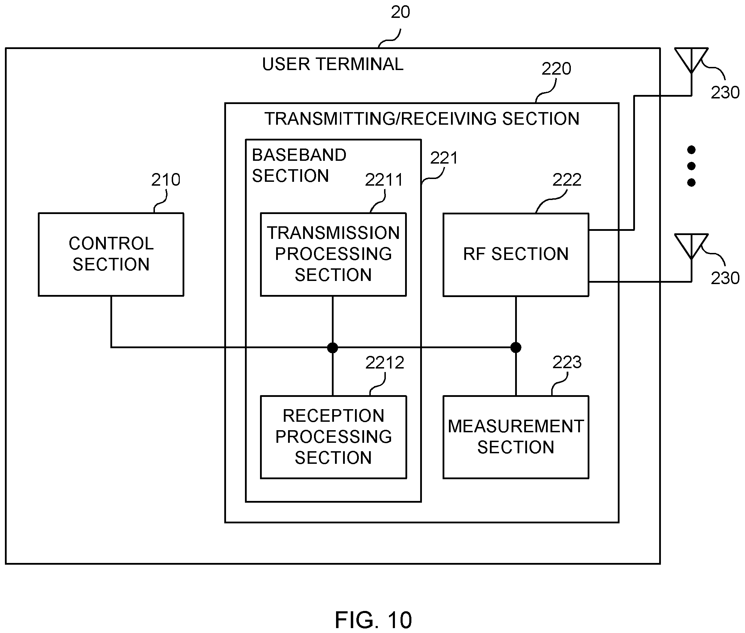

FIG. 10 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 may include a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may include the transmission processing section 2211 and the RF section 222. The receiving section may include the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), or the like, for example, on data, control information, or the like acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing may be based on a configuration of transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, or the like, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, or the like, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, or the like, based on the received signal. The measurement section 223 may measure a received power (for example, RSRP), a received quality (for example, RSRQ, SINR, SNR), a signal strength (for example, RSSI), channel information (for example, CSI), or the like. The measurement results may be output to the control section 210.

Note that the transmitting section and the receiving section of the user terminal 20 in the present disclosure may be constituted with at least one of the transmitting/receiving section 220 and the transmitting/receiving antennas 230.

The control section 210 may determine an upper limit of a second transmit power for a second uplink transmission based on at least one of a specific maximum output power, a resource amount used for one or more first uplink transmissions, and a first transmit power used for the one or more first uplink transmissions. The transmitting/receiving section 220 may perform the second uplink transmission by using the second transmit power.

The control section 210 may determine the upper limit by adding or subtracting an adjustment amount based on the resource amount to or from a value based on the specific maximum output power.

The control section 210 may determine available energy based on the specific maximum output power in a specific period and determine the upper limit in the specific period based on the available energy.

The specific maximum output power may be 30 dBm or higher or may be lower than 23 dBm.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

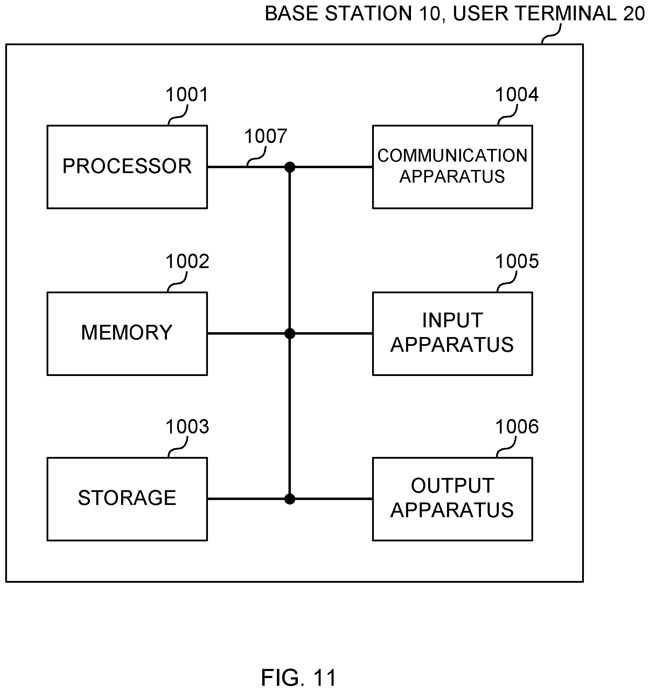

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," or the like instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB/RB group/set/pair," or the like.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, each common RB may be identified by an index of the RB based on a common reference point of the carrier. A PRB may be defined by a certain BWP and may be numbered in the BWP.

A BWP may include a UL BWP (BWP for UL) and a DL BWP (BWP for DL). One or a plurality of BWPs may be configured in one carrier for a UE.

At least one of configured BWPs may be active, and a UE does not need to assume to transmit/receive a certain signal/channel outside such an active BWP. Note that a "cell," a "carrier," or the like in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (such as PUCCH and PDCCH) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, or the like may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "being X") does not necessarily have to be notified explicitly, and may be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a case that a base station transmits information to a terminal may be interchangeably interpreted as a case that the base station indicates, for the terminal, control/operation based on the information.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

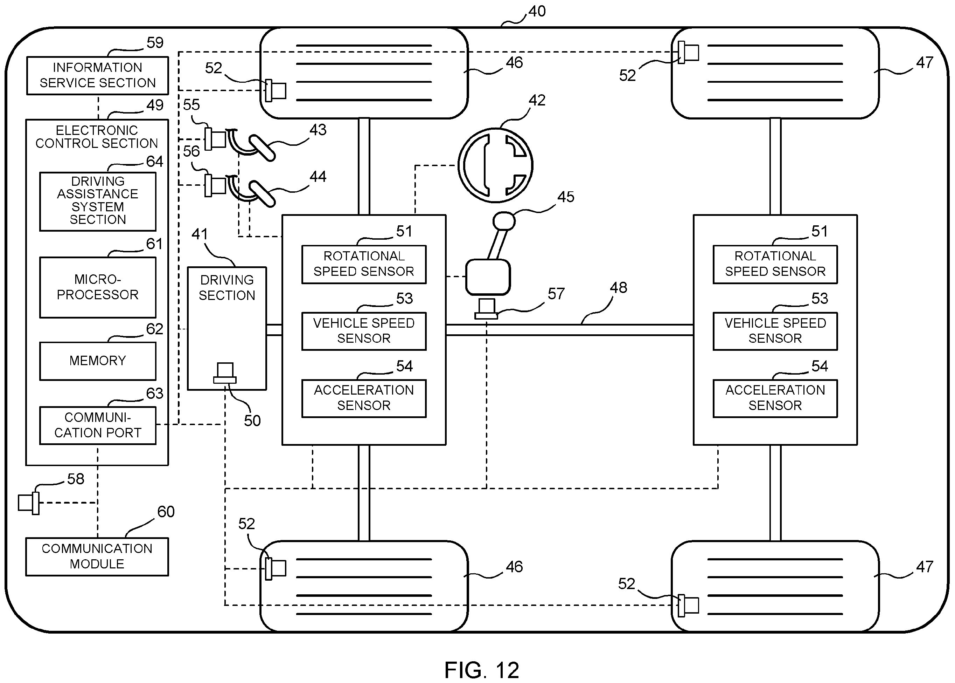

FIG. 12 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

**EP 4 546 893 A1**

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of operations. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some operation.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

a control section that determines, based on at least one of a specific maximum output power, a resource amount used for one or more first uplink transmissions, and a first transmit power used for the one or more first uplink transmissions, an upper limit of a second transmit power for a second uplink transmission; and
a transmitting section that performs the second uplink transmission by using the second transmit power.

2. The terminal according to claim 1, wherein
the control section determines the upper limit by adding or subtracting an adjustment amount based on the resource amount to or from a value based on the specific maximum output power.

3. The terminal according to claim 1, wherein
the control section determines available energy based on the specific maximum output power in a specific period and determines the upper limit in the specific period based on the available energy.

4. The terminal according to claim 1, wherein
the specific maximum output power is 30 dBm or higher or is lower than 23 dBm.

5. A radio communication method for a terminal, comprising:

determining, based on at least one of a specific maximum output power, a resource amount used for one or more first uplink transmissions, and a first transmit power used for the one or more first uplink transmissions, an upper limit of a second transmit power for a second uplink transmission; and
performing the second uplink transmission by using the second transmit power.

6. A base station comprising:

a control section that controls reception of one or more first uplink transmissions; and
a receiving section that performs reception of a second uplink transmission, wherein
an upper limit of a second transmit power for the second uplink transmission is based on at least one of a specific maximum output power, a resource amount used for the one or more first uplink transmissions, and a first transmit power used for the one or more first uplink transmissions.

**UE Power Class**

| NR band | Class 1 (dBm) | Tolerance (dB) | Class 1.5 (dBm) | Tolerance (dB) | Class 2 (dBm) | Tolerance (dB) | Class 3 (dBm) | Tolerance (dB) |
|---|---|---|---|---|---|---|---|---|
| n1 | | | | | 26 | +2/-3 | 23 | ±2 |
| ... | | | | | | | | |
| n14 | 31 | +2/-3 | | | | | 23 | ±2 |
| ... | | | | | | | | |
| n78 | | | 29 | +2/-3 | 26 | +2/-3 | 23 | +2/-3 |
| ... | | | | | | | | |

FIG. 1

EP 4 546 893 A1

FIG. 2A

Output power limit

Actual maximum
output power

Addition

Default maximum
output power

FIG. 2B

Output power limit

Nominal maximum
output power

Adjustment

Actual maximum
output power

EP 4 546 893 A1

UL#1
(Actual transmission Power
= X1 dBm,
Duration = Y1 %)

UL#2

Evaluation period

FIG. 3

EP 4 546 893 A1

UL#1
(Actual transmission
Power = X1 dBm,
Duration
= Y1 %)

UL#2
(Actual transmission
Power = X2 dBm,
Duration
= Y2 %)

UL#3

Evaluation period

FIG. 4

EP 4 546 893 A1

FIG. 5A

UL#2

Evaluation period

FIG. 5B

UL#2

Evaluation period

FIG. 5C

UL#2

Evaluation period

Sub-evaluation period

Sub-evaluation period

UL#1
(Actual transmission Power
= X1 dBm,
Duration = Y1 %)

UL#2

Evaluation period

FIG. 6

FIG. 7

FIG. 8

FIG. 9

EP 4 546 893 A1

FIG. 10

USER TERMINAL 20

TRANSMITTING/RECEIVING SECTION 220

BASEBAND SECTION 221

TRANSMISSION PROCESSING SECTION 2211

RECEPTION PROCESSING SECTION 2212

RF SECTION 222

MEASUREMENT SECTION 223

CONTROL SECTION 210

230

230

BASE STATION 10, USER TERMINAL 20

FIG. 11

FIG. 12

## INTERNATIONAL SEARCH REPORT

International application No.

**PCT/JP2022/024668**

### A. CLASSIFICATION OF SUBJECT MATTER

*H04W 52/34*(2009.01)i
FI:  H04W52/34

According to International Patent Classification (IPC) or to both national classification and IPC

### B. FIELDS SEARCHED

Minimum documentation searched (classification system followed by classification symbols)

H04W4/00-H04W99/00 H04B7/24-H04B7/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

3GPP TSG RAN WG1-4, SA WG1-4, CT WG1,4

### C. DOCUMENTS CONSIDERED TO BE RELEVANT

| Category* | Citation of document, with indication, where appropriate, of the relevant passages | Relevant to claim No. |
|---|---|---|
| X | JP 2016-532326 A (SUN PATENT TRUST) 13 October 2016 (2016-10-13) | 1, 4-6 |
|  | fig. 16 |  |
| Y | fig. 16 | 2 |
| A | fig. 16 | 3 |
| Y | WO 2013/108315 A1 (NEC CORPORATION) 25 July 2013 (2013-07-25) | 2 |
|  | paragraphs [0046]-[0052] |  |
| A | SAMSUNG. CR to TS 38.213 capturing the RAN1#92bis and RAN1#93 meeting agreements and aligning higher layer parameters with TS 38.331 [online]. 3GPP TSG RAN WG1 #93 R1-1807957. 07 June 2018 | 1-6 |
|  | pp. 1, 10-16 |  |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 December 2022** | **10 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/024668**

| Patent document cited in search report | | | Publication date (day/month/year) | Patent family member(s) | | | Publication date (day/month/year) |
|---|---|---|---|---|---|---|---|
| JP | 2016-532326 | A | 13 October 2016 | US fig. 16 | 2016/024128 | A1 | |
| | | | | EP | 2854460 | A1 | |
| | | | | WO | 2015/045283 | A1 | |
| | | | | CN | 105580449 | A | |
| | | | | KR 10-2016-0062098 | | A | |
| WO | 2013/108315 | A1 | 25 July 2013 | US paragraphs [0061]-[0067] | 2015/0011229 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300*, April 2010